# EUROPEAN PATENT APPLICATION

(11) **EP 3 178 967 A1**
(43) Date of publication of application: **14.06.2017**
(21) Application number: 16002563.1
(22) Date of filing: 01.12.2016
(51) Int. Cl.: C25B 1/00, C25B 9/00

(54) **GRAPHENE MASS PRODUCTION EQUIPMENT AND MANUFACTURING METHOD THEREOF**

(30) Priority: 10.12.2015 TW 104141572
(71) Applicant: Yao, Pei-Chih, New Taipei City 234 (TW)
(72) Inventor: Yao, Pei-Chih, New Taipei City 234 (TW)
(74) Representative: Zeitler Volpert Kandlbinder Patent- und Rechtsanwälte Partnerschaft mbB

(57) **Abstract**

Disclosed are a graphene mass production equipment and its manufacturing method. The manufacturing method includes: (1) setting a first electrode and a second electrode 12 in an electrolyte 16 of an electrolytic cell 10, and the first electrode is a positive electrode and the second electrode 12 is a negative S1electrode, and the first electrode is installed in a roller 21 having a screen 211, and the roller 21 contains graphite pieces 22; (2) applying a first bias voltage and rolling the roller 21 under the first bias voltage to perform an intercalation of the graphite pieces 22; (3) applying a second bias voltage to perform the exfoliation of the graphite pieces 22; (4) forming at least one layer with the graphene pieces after the exfoliation step; (5) depositing the graphene pieces through the screen 211 of the roller 21 to the bottom of the electrolytic cell 10, so as to overcome the drawbacks of the conventional graphene mass production.

## Description

### FIELD OF INVENTION

The present invention relates to a graphene mass production technology, in particular to a graphene mass production equipment and its manufacturing method using an electrochemical method to mass produce graphene and collect the graphene products conveniently.

### BACKGROUND OF INVENTION

### 1. Description of the Related Art

Graphite is a crystal structure composed of plural layers of graphene, and graphene is a single-layer graphite structure, and a bond is formed between four carbon atoms by a sp² crystal structure and three adjacent carbon atoms, and extended into a two-dimensional honey-comb hexagonal shape. At present, graphene has been used extensively in the areas of semiconductors, touch panels, solar cells, etc, and is expected to be used extensively in the industrial areas of optoelectronics, green power generation, environmental and biomedical sensing, composite functional material, etc in the future.

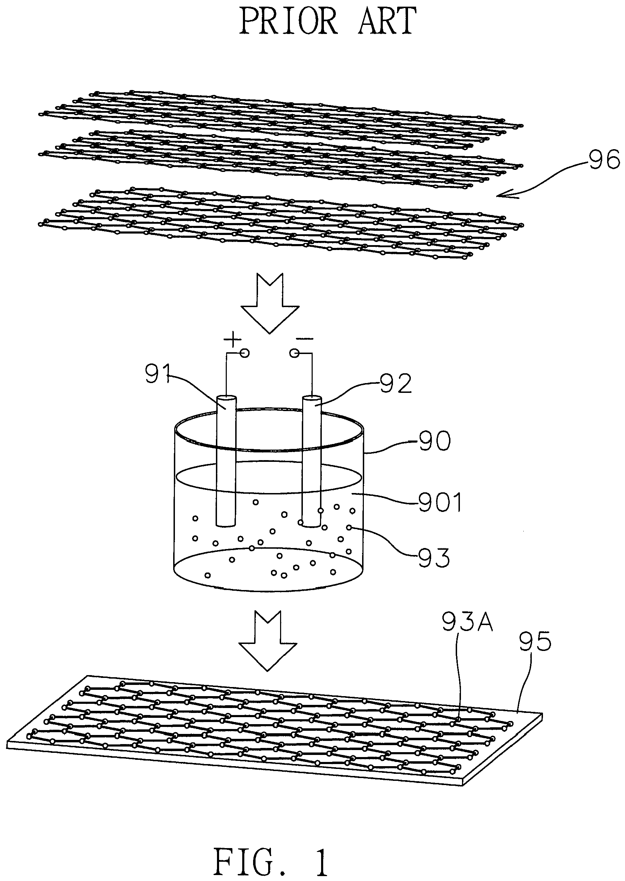

In general, the conventional graphene manufacturing methods include mechanical exfoliation, epitaxial growth, chemical vapor deposition (CVD), chemical exfoliation and electrochemical exfoliation. With reference to FIG. 1 for a schematic view of a graphite structure formed by three single-layered graphene at the top through Van der Waal forces, and the middle figure shows the electrochemical electrolysis that uses a graphite rod electrode to manufacture graphene, and this method is a conventional electrochemical exfoliation method for manufacturing graphene, and its equipment includes an electrolytic cell 90 having an electrolyte 901, a positive electrode 91, and a negative electrode 92 disposed therein, wherein the positive electrode 91 is made of a graphite material, and the negative electrode 92 is made of a metal or graphite material, and the manufacturing process uses a first bias voltage to perform an intercalation of the positive electrode graphite material, so that the anions in the electrolyte 901 are intercalated into between two adjacent graphene layers of the positive electrode (or rod graphite material) and/or their grain boundary a voltage difference, and then a second bias voltage is used to perform an exfoliation of the graphite material and the exfoliated graphene 93 is deposited to the bottom of the electrolytic cell 90 to complete the manufacture of graphene in laboratory. Since graphene 93 is a substance with single atom layer, and the bottom of the figure shows a blowup view of the graphene 93A, and the graphene 93A may be set on a substrate 95 and used to change the properties of the substrate 95 such as electrical conductivity, thermal conductivity, transmittance or structural strength.

Although the aforementioned conventional equipment and method for manufacturing graphene through electrochemical exfoliation can manufacture graphene, they still have the following drawbacks. The conventional equipment and method are used in a static way without any appropriate auxiliary external force, and the distribution of electric fields between the electrodes, and the concentration and temperature of the electrolyte are non-uniform in the production process due to the non-coaxial symmetric design of the electrodes, which are unfavorable to a continual effective manufacture of graphene. Obviously, it is not an ideal manufacturing method for mass production.

In view of the aforementioned drawbacks of the conventional equipment and method for manufacturing graphene by electrochemical exfoliation, the inventor of the present invention based on years of experience in the related industry to conduct researches and experiments, and finally developed a graphene mass production equipment and a manufacturing method to overcome the drawbacks of the prior art.

### 2. Summary of the Invention

Therefore, it is a primary objective of the present invention to overcome the drawbacks of the conventional graphene manufacturing by electrochemical exfoliation by providing an equipment and a manufacturing method feasible for mass production and capable of collecting and accessing graphene conveniently, so as to achieve excellent beneficial effects of the manufacture of graphene.

Another objective of the present invention is to provide a uniform distribution of electric fields of the intercalated and exfoliated objects by using the circulation force of the rolling of the roller and the design of the coaxial symmetric electrodes, so that the intercalation and exfoliation of the graphite are more efficient and uniform, and the electrolyte will not have a non-uniform temperature gradient, which is favorable to the manufacture of graphene by electrochemical exfoliation.

To achieve the aforementioned and other objectives, the present invention provides a graphene mass production equipment comprising: an electrolytic cell, containing an electrolyte therein and a first electrode and a second electrode submerged into the electrolyte; a roller device 20, including a roller and a plurality of graphite pieces disposed in the roller, and the roller being submerged into the electrolyte and provided for containing the first electrode, and the roller being linked and rotated by a linkage mechanism, and a screen disposed on a cylindrical wall of the roller having a plurality of through holes, and each through hole of the screen being greater than the graphene piece, and the electrolyte entering and exiting the roller through the through holes, and the plurality of graphite pieces being submerged into the electrolyte to carry out the electrochemical steps of intercalation and exfoliation to produce the graphene pieces.

Wherein, the first electrode is a positive electrode, and the second electrode is a negative electrode.

Wherein, the equipment further comprises a receiving device installed to the bottom of the electrolytic cell.

Wherein, the receiving device includes a pipeline and a collection tank, and the pipeline is coupled to an electrically connected tank outlet at the bottom of the electrolytic cell, and the collection tank is coupled to the pipeline and has a screen outlet having a plurality of through bores and disposed at the bottom of the collection tank, and each through bore of the screen outlet is smaller than the exfoliated graphene piece.

Wherein, the pipeline further includes a first pipeline, a second pipeline and a third pipeline, and the first pipeline is coupled between the electrolytic cell and the collection tank, and the first pipeline has a screening portion with a plurality of screen-meshed through holes, and each screen-meshed through hole of the screening portion is greater than the graphene piece.

Wherein, the second pipeline is coupled to the screen outlet, and a control tank is coupled to the other end of the second pipeline opposite to the collection tank, and the control tank is provided for detecting, adjusting, and controlling the concentration, pH value, and composition of the electrolyte.

Wherein, the third pipeline is coupled to the control tank, and the third pipeline has an outlet nozzle for returning the electrolyte flowing out from the control tank into the electrolytic cell.

Wherein, the equipment further comprises a supply tank coupled to an interface of the third pipeline by a fourth pipeline, and the supply tank contains a new electrolyte, and the new electrolyte is filled into the third pipeline through the fourth pipeline.

The manufacturing method of the present invention comprises the steps of: (1) setting a first electrode and a second electrode into an electrolyte of an electrolytic cell, wherein the first electrode is a positive electrode, the second electrode is a negative electrode, the first electrode is installed in a roller with a screen, the roller contains a plurality of graphite pieces, the screen has a plurality of through holes each greater than the graphene piece, and the electrolyte enters and exits the roller through the through holes; (2) applying a first bias voltage, and rolling the roller under the first bias voltage to perform an intercalation of the graphite pieces; (3) applying a second bias voltage while the roller is rolling to perform an exfoliation of the graphite pieces; (4) forming at least one layer with a plurality of graphene pieces; and (5)depositing the plurality of graphene pieces through the screen of the roller t the bottom of the electrolytic cell.

Wherein, the manufacturing method further comprises the step of collecting and taking out the plurality of graphene pieces that flow out with the electrolyte from the electrolytic cell after the Step (5) takes place.

The above and other objects, features and advantages of this disclosure will become apparent from the following detailed description taken with the accompanying drawings.

### BRIEF DESCRIPTION OF THE DRAWINGS

FIG. 1 is a schematic view of a conventional electrochemical exfoliation method for manufacturing graphene;
FIG. 2 is a side view of an equipment of the present invention;
FIG. 3 is a perspective view of an equipment of the present invention;
FIG. 4 is a side view showing the operation of an equipment of the present invention;
FIG. 5 is a perspective view of an equipment of another embodiment the present invention;
FIG. 6 is a schematic view of a collecting and retrieving assembly of an equipment of the present invention;
FIG. 7 is a flow chart of a manufacturing method of the present invention.

### DESCRIPTION OF THE PREFERRED EMBODIMENTS

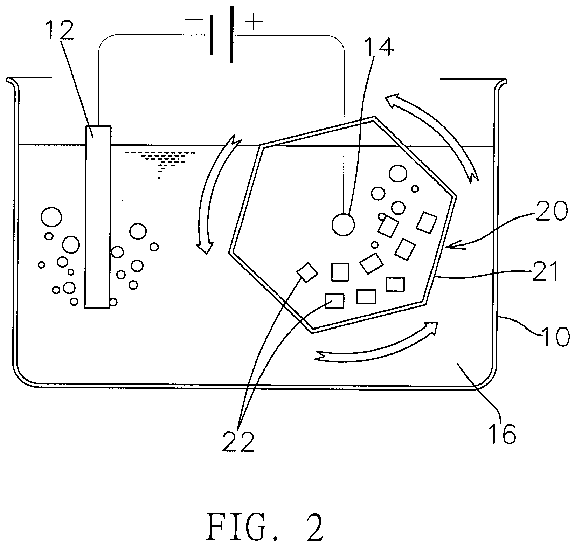

With reference to FIGS. 2, 3A, 3B and 4 for a graphene mass production equipment and its manufacturing method in accordance with a preferred embodiment of the present invention, the drawings are provided for the purpose of illustrating the basic structure of the present invention only, but not intended for limiting the scope of the invention. It is noteworthy that the drawings are not necessarily drawn in exact shape, or scale. The graphene mass production equipment of the present invention comprises an electrolytic cell 10 and a roller device 20, and the electrolytic cell 10 contains an electrolyte 16 and a first electrode 14 and a second electrode 12 submerged into the electrolyte 16, wherein the electrolyte 16 has an electrolytic solution, and the electrolyte 16 includes hydrochloric acid (HCl), sulfuric acid (H₂SO₄) or hydrogen bromide (HBr), and the electrolyte 16 may also contain an oxidizing agent such as potassium dichromate (K₂Cr₂O₇), perchloric acid (HMnO₂) or potassium permanganate (KMnO₄), and the electrolyte 16 has a pH value from 1 to 10 , or another additive (such as potassium hydroxide) may be added into the electrolyte 16 in order to obtain a graphene with better quality from the electrolysis. The first electrode 14 is a positive electrode, and the second electrode 12 is a negative electrode, and the first electrode 14 is installed in the roller and made of a graphite material, a metal or an alloy, and the second electrode 12 is installed outside the roller and made of a graphite material, a metal, an alloy or any equivalent composite material. In addition to graphite, the graphite material may be highly oriented pyrolytic graphite (HOPG), PAN-based graphite, pitch-based graphite, etc, and the metal of the electrodes may be noble metals such as platinum (Pt), silver (Ag), gold (Au), iridium (Ir), osmium (Os), palladium (Pd), rhodium (Rh) or ruthenium (Ru), or related alloys that are resistant to chemical corrosion and oxidation. Since the main material source of the manufactured graphene of the present invention is different from the material of the conventional electrode, therefore the first electrode 14 and the second electrode 12 can be used for electrical conduction between the graphite pieces in the roller during the electrochemical intercalation and exfoliation processes, and the materials and their polarities are not limited to those disclosed here.

The roller device 20 includes a roller 21 and a plurality of graphite pieces 22 disposed in the roller, and the roller 21 is submerged into the electrolyte 16 and provided for containing the first electrode 14. In other words, the first electrode 14 is disposed in the roller 21, and a screen 211 having a plurality of through holes is installed on a cylindrical wall of the roller 21, and each through hole of the screen 211 is smaller than the graphite piece in the roller but greater than the graphene piece after the electrochemical exfoliation takes place, and the electrolyte enters or exits the roller through the through holes, and the screen 211 may have a size from 18 to 1000 meshes, preferably 35 to 300 meshes and is provided for filtering the larger un-exfoliated graphite pieces and allowing the exfoliated single-layer or less-layered graphene pieces to pass from the roller 21 through the screen 211 out of the roller 21, and the graphite pieces 22 are disposed in the roller 21. In the meantime, the graphite pieces 22 are also submerged into the electrolyte 16. The roller 21 is linked and connected to a linkage mechanism (not shown in the figure). In other words, the roller 21 is linked by the linkage mechanism to rotate in the electrolytic cell 10 (or the electrolyte 16). When the roller 21 is rotated, the graphite pieces 22 in the roller 21 are driven to turn over.

Wherein, the graphite piece 22 is nature graphite, synthetic graphite, carbon black, furnace black, mesocarbon microbead (MCMB), highly oriented graphite sheet (HOGS) or any combination of the above.

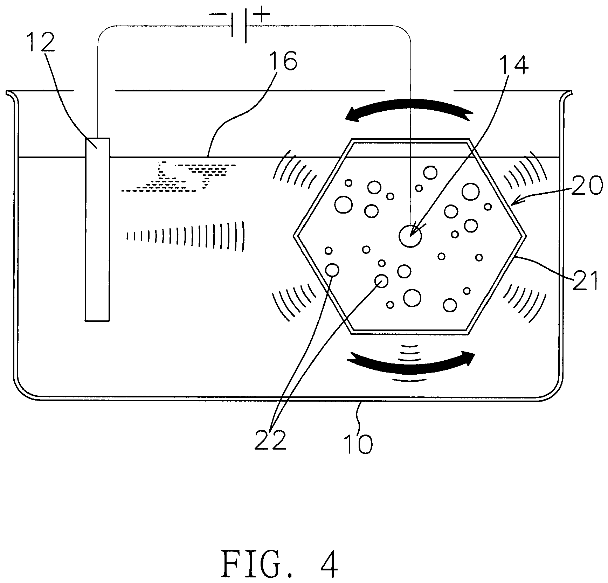

With reference to FIG. 4 for the operation of a graphene mass production equipment of the present invention, the graphite pieces 22 in the roller 21 are reacted with the electrolyte 16 sufficiently. In the manufacturing process, a first bias voltage is used, and the roller 21 is rolled at the first bias voltage to perform an intercalation of the graphite pieces 22 (or graphite material), so that anions such as sulfate ions and nitrite ions of the electrolyte 16 are intercalated between two adjacent graphene layers of the graphite piece 22 by a voltage difference and/or their grain boundary, and the first bias voltage falls within a range from +0.5 volt to +12 volts, and the reaction time is from 1 to 25 minutes. The roller 21 is rolled continuously, and a second bias voltage is used for the exfoliation of the graphite pieces 22, wherein the second bias voltage is greater than the first bias voltage and falls within a range from +12 volts to +36 volts, and the reaction time is from 1 to 45 minutes. In the manufacturing process, a third bias voltage or a positive voltage with a pulse waveform may be applied after the second bias voltage is applied, but the invention is not limited to such arrangement only.

The graphite pieces 22 in the electrolyte 16 produce a plurality of graphene pieces 30 after the exfoliation, and each graphene piece 30 has a thickness smaller than 5 nm, and a lateral size from 1 to 50µm, and the graphene pieces 30 pass through the screen 211 of the roller 21 and fall out from the roller 21 and is deposited at the bottom of the electrolytic cell 10 or suspended in the electrolyte. Since the graphene pieces 30 are not water soluble, therefore the plurality of graphene pieces 30 are in a suspended solid form which can be collected and taken out.

Wherein, the graphene piece 30 is a single-layer graphene, a 2∼5 layered graphene, or a combination of the above, and the graphene piece 30 produced by the method of the present invention is a high-quality single-layer graphene.

When the present invention uses an electrochemical reaction to exfoliate and produce the plurality of graphene pieces 30, the roller 21 is in a rotating status and capable of mixing the graphite pieces 22 with the electrolyte 16 sufficiently, so that a uniform distribution of electric fields can be achieved when the second electrode 12 applies an electric field to the first electrode 14 in the roller 21 (or the electrolytic cell 10), so that the intercalation and exfoliation of the graphite is more efficient and uniform, and the electrolyte 16 will not have a non-uniform temperature and a concentration gradient to facilitate the manufacturing and production of the graphene pieces 30 by using the electrochemical exfoliation method.

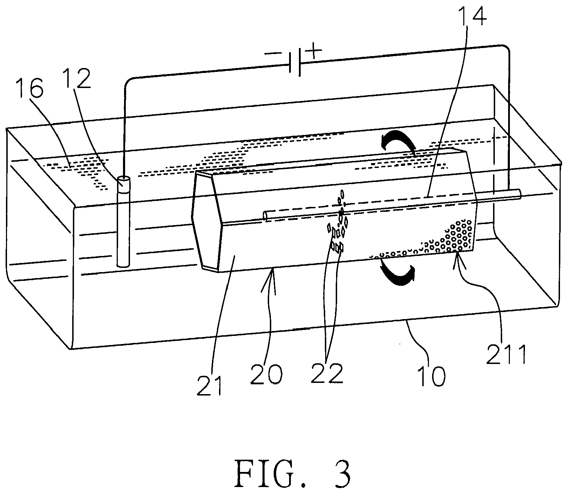

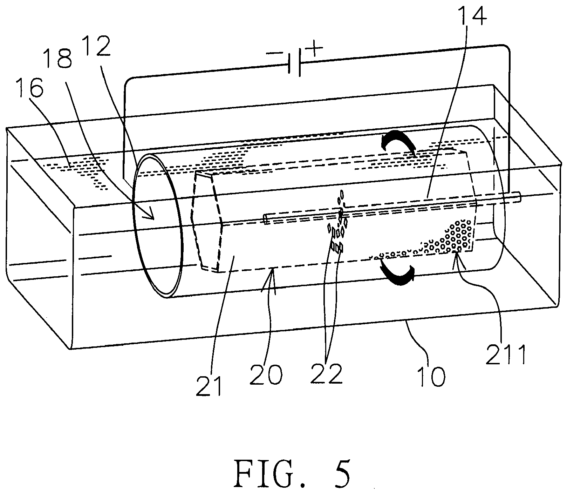

With reference to FIG. 5 for a graphene mass production equipment in accordance with another embodiment of the present invention, the difference between this embodiment and the previous embodiment as shown in FIG. 3 resides on that the second electrode 12 is in a tubular shape having a hollow space 18 therein, and the roller device 20 is installed in the hollow space 18, and such structure is capable of providing a more uniform distribution of electric fields produced by applying the second electrode 12 to the first electrode 14 in the roller 21 when the roller 21 is in a rotating status, so as to facilitate manufacturing the graphene piece 30 by the electrochemical exfoliation method.

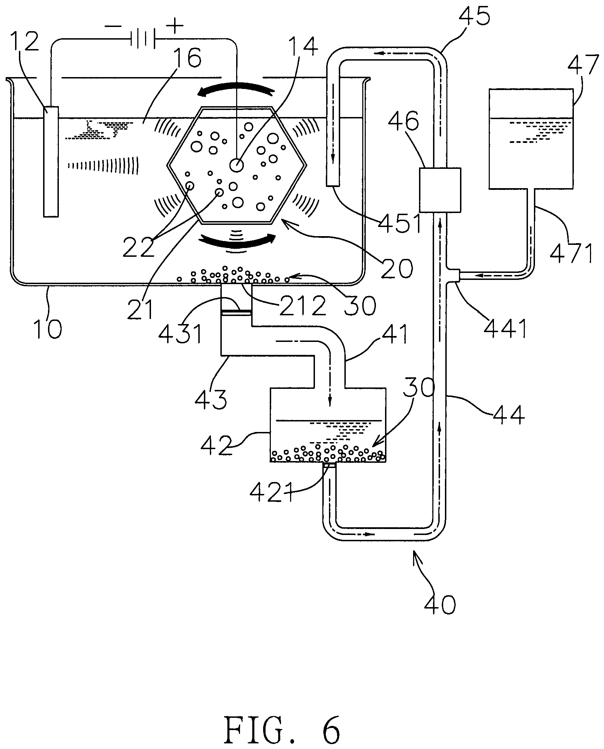

With reference to FIG. 6 for a graphene mass production equipment of the present invention, the equipment further comprises a receiving device 40 installed and coupled to the bottom of the electrolytic cell 10, and the receiving device 40 includes a pipeline 41 and a collection tank 42, and the pipeline 41 is coupled to an electrolytic cell outlet 212 at the bottom of the electrolytic cell 10, and the collection tank 42 is coupled to the pipeline 41 and has a screen outlet 421 with a plurality of through bores formed at the bottom of the collection tank 42, and each through bore of the screen outlet 421 is smaller than the size of the graphene piece 30, and the through bore has an area between 200×200nm² to 1200×1200nm², preferably 300×300nm² to 800×800nm². Therefore, the graphene pieces 30 deposited at the bottom of the electrolytic cell 10 will flow out from the electrolytic cell outlet 212 with the electrolyte 16 and enter into the pipeline 41, an then pass through the pipeline 41 to enter into the collection tank 42, so that the graphene piece 30 is concentrated, filtered and remained in the collection tank 42 to facilitate collecting and taking out the graphene pieces 30, and the electrolyte 16 in the collection tank 42 passes through the screen outlet 421 and flows out from the collection tank 42.

In an appropriate implementation method, the pipeline 41 further includes a first pipeline 43, a second pipeline 44 and a third pipeline 45, and the first pipeline 43 is coupled between the electrolytic cell 10 and the collection tank 42, and the first pipeline 43 has a screening portion 431 with a plurality of screen-meshed through holes, and each screen-meshed through hole of the screening portion 431 is greater than the graphene piece 30 and has a size from 18 to 1000 meshes, preferably 35 to 300 meshes, so that the graphene pieces 30 can pass through the screening portion 431 and impurities with a larger particle diameter are filtered and remained. The second pipeline 44 is coupled to the screen outlet 421 of the collection tank 42 for receiving the electrolyte 16 flowing out from the collection tank 42. In addition, a control tank 46 is coupled to another end of the collection tank 42 opposite to the second pipeline 44, and the control tank 46 is provided for detecting, adjusting and controlling the concentration, pH value, and composition of the electrolyte 16. The third pipeline 45 is coupled to the control tank 46, and the third pipeline 45 has an outlet nozzle 451, so that the electrolyte flowing out from the control tank 46 is returned into the electrolytic cell 10 to achieve the recycle of the electrolyte 16. In addition, a supply tank 47 is coupled to an interface 441 of the third pipeline 45 by a fourth pipeline 471, and the supply tank 47 contains a new electrolyte which is filled into the third pipeline 45 through the fourth pipeline 471 and provided for resupplying the consumed electrolyte 16 in the manufacturing process of the present invention.

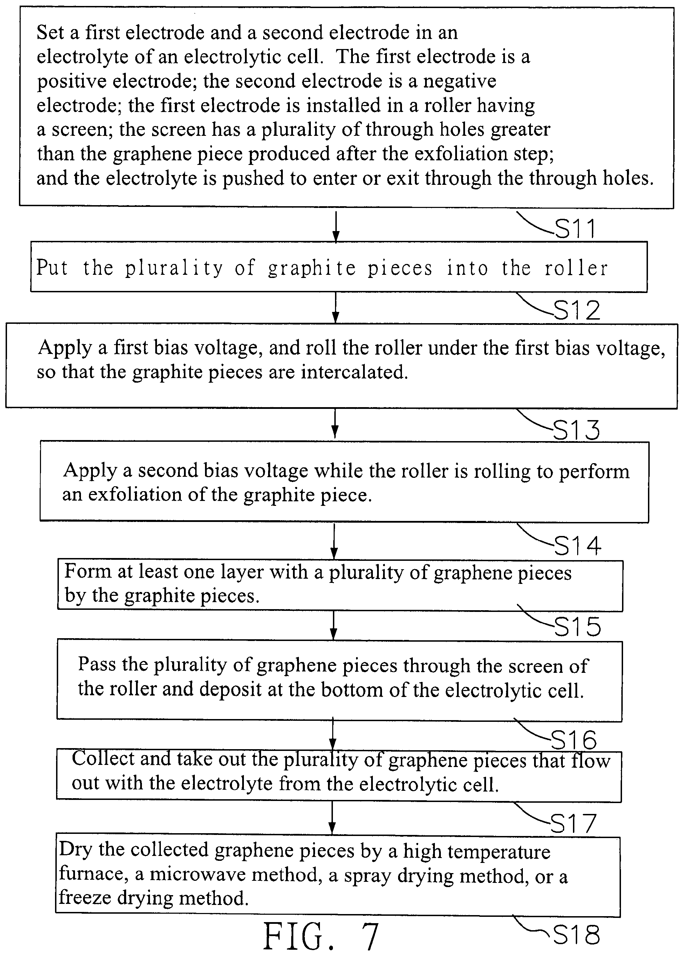

With reference to FIG. 7 for a graphene mass production manufacturing method using the aforementioned equipment of the present invention, the manufacturing method comprises the following steps: (1) Set a first electrode and a second electrode in an electrolyte of an electrolytic cell, wherein the first electrode is a positive electrode, and the second electrode is a negative electrode, and the first electrode is installed in a roller having a screen, and the screen has a plurality of through holes greater than the graphene piece 30 produced after the exfoliation step, and the electrolyte is pushed to enter or exit through the through holes (S11); (2) Put the plurality of graphite pieces into the roller (S12); (3) Apply a first bias voltage, and roll the roller under the first bias voltage, so that the graphite pieces 22 are intercalated (S13); (4) Apply a second bias voltage while the roller is rolling to perform an exfoliation of the graphite piece 22 (S14); (5) Form at least one layer with a plurality of graphene pieces 30 by the graphite pieces 22 (S15); (6) Pass the plurality of graphene pieces 30 through the screen of the roller and deposit at the bottom of the electrolytic cell (S16); (7) Collect and take out the plurality of graphene pieces 30 that flow out with the electrolyte from the electrolytic cell (S17); Dry the collected graphene pieces 30 by a high temperature furnace, a microwave method, a spray drying method, or a freeze drying method (S18).

With aforementioned assembly of the graphene mass production equipment and the design of the manufacturing method in accordance with the present invention, the invention can overcome the drawbacks of the conventional method of manufacturing graphene by electrochemical exfoliation, so as to achieve a feasible mass production, facilitate collecting and taking out the graphene, and providing excellent beneficial effects for the manufacture of the graphene. In the meantime, the present invention provides a uniform distribution of electric fields of the intercalated and exfoliated objects by using the circulation force of the rolling of the roller and the design of the coaxial symmetric electrodes, so that the intercalation and exfoliation of the graphite are more efficient and uniform, and the electrolyte will not have a non-uniform temperature gradient, which is favorable to the manufacture of graphene by electrochemical exfoliation.

While the invention has been described by means of specific embodiments, numerous modifications and variations could be made thereto by those skilled in the art without departing from the scope and spirit of the invention set forth in the claims.

## Claims

1. A graphene mass production equipment, comprising:
an electrolytic cell 10, containing an electrolyte 16 therein and a first electrode 14 and a second electrode 12 submerged into the electrolyte 16;
a roller device 20, including a roller 21 and a plurality of graphite pieces 22 disposed in the roller 21, and the roller 21 being submerged into the electrolyte 16 and provided for containing the first electrode 14, and the roller 21 being linked and rotated by a linkage mechanism, and a screen 211 disposed on a cylindrical wall of the roller 21 having a plurality of through holes, and each through hole of the screen 211 being greater than the graphene piece, and the electrolyte 16 entering and exiting the roller 21 through the through holes, and the plurality of graphite pieces 22 being submerged into the electrolyte 16 to carry out the electrochemical steps of intercalation and exfoliation to produce the graphene pieces.

2. The graphene mass production equipment according to claim 1, wherein the first electrode 14 is a positive electrode, and the second electrode 12 is a negative electrode.

3. The graphene mass production equipment according to claim 1, wherein the second electrode 12 is in a tubular shape having a hollow space 18 defined in the second electrode 12, and the roller device 20 is installed in the hollow space 18.

4. The graphene mass production equipment according to claim 4, wherein the graphite piece 22 is one selected from the group consisting of nature graphite, synthetic graphite, carbon black, furnace black, mesocarbon microbead (MCMB), highly oriented graphite sheet (HOGS) or a combination thereof.

5. The graphene mass production equipment according to claim 4, wherein the graphene piece is one selected from the group consisting of a single-layer graphene, a 2∼5 layered graphene, or a combination thereof.

6. The graphene mass production equipment according to claim 1, further comprising a receiving device 40 installed and coupled to the bottom of the electrolytic cell 10.

7. The graphene mass production equipment according to claim 6, wherein the receiving device 40 includes a pipeline 41 and a collection tank 42, and the pipeline 41 is coupled to an electrically connected tank outlet at the bottom of the electrolytic cell 10, and the collection tank 42 is coupled to the pipeline 41 and has a screen 211 outlet having a plurality of through bores and disposed at the bottom of the collection tank 42, and each through bore of the screen 211 outlet is smaller than the exfoliated graphene piece.

8. The graphene mass production equipment according to claim 7, wherein the pipeline 41 further includes a first pipeline 43, a second pipeline 44 and a third pipeline 45, and the first pipeline 43 is coupled between the electrolytic cell 10 and the collection tank 42, and the first pipeline 43 has a screening portion 431 with a plurality of screen-meshed through holes, and each screen-meshed through hole of the screening portion 431 is greater than the graphene piece.

9. The graphene mass production equipment according to claim 8, wherein the second pipeline 44 is coupled to the screen outlet, and a control tank 46 is coupled to the other end of the second pipeline 44 opposite to the collection tank 42, and the control tank 46 is provided for detecting, adjusting, and controlling the concentration, pH value, and composition of the electrolyte 16.

10. The graphene mass production equipment according to claim 8, wherein the third pipeline 45 is coupled to the control tank 46, and the third pipeline 45 has an outlet nozzle 451 for returning the electrolyte 16 flowing out from the control tank 46 into the electrolytic cell 10.

11. The graphene mass production equipment according to claim 10, further comprising a supply tank 47 coupled to an interface 441 of the third pipeline 45 by a fourth pipeline 471, and the supply tank 47 contains a new electrolyte, and the new electrolyte is filled into the third pipeline 45 through the fourth pipeline 471.

12. A graphene mass production manufacturing method, comprising:
Step 1: setting a first electrode 14 and a second electrode 12 into an electrolyte 16 of an electrolytic cell 10, wherein the first electrode 14 is a positive electrode, the second electrode 12 is a negative electrode, the first electrode 14 is installed in a roller 21 with a screen 211, the roller 21 contains a plurality of graphite pieces 22, the screen 211 has a plurality of through holes each greater than the graphene piece, and the electrolyte 16 enters and exits the roller 21 through the through holes;
Step 2: applying a first bias voltage, and rolling the roller 21 under the first bias voltage to perform an intercalation of the graphite pieces 22;
Step 3: applying a second bias voltage while the roller 21 is rolling to perform an exfoliation of the graphite pieces 22;
Step 4: forming at least one layer with a plurality of graphene pieces; and
Step 5: depositing the plurality of graphene pieces through the screen 211 of the roller 21 at the bottom of the electrolytic cell 10.

13. The graphene mass production manufacturing method according to claim 12, further comprising the step of collecting and taking out the plurality of graphene pieces that flow out with the electrolyte 16 from the electrolytic cell 10 after the Step 5 takes place.

14. The graphene mass production manufacturing method according to claim 13, wherein the graphene piece is collected and taken out by a high temperature furnace or a microwave heating or spray drying method, or dried by a freeze-drying method.
